# EUROPÄISCHE PATENTSCHRIFT

(11) **EP 1 046 576 B1**
(45) Veröffentlichungstag und Bekanntmachung des Hinweises auf die Patenterteilung: **04.10.2006**
(21) Anmeldenummer: 00106295.9
(22) Anmeldetag: 23.03.2000
(51) Int. Cl.: B64C 1/18, F24D 13/02, B64C 1/40, H05B 3/26

(54) **Plattenbauteil, insbesondere für eine Fussbodenplatte in einem Flugzeug**
Panel unit, particularly for an aircraft floor panel
Unité de panneau, notamment pour panneau de plancher d'aéronef

(30) Priorität: 24.04.1999 DE 19918736
(43) Veröffentlichungstag der Anmeldung: 25.10.2000
(73) Patentinhaber: Airbus Deutschland GmbH, 21129 Hamburg (DE)
(72) Erfinder: Meisiek, Jürgen, 25587 Münsterdorf (DE)
(74) Vertreter: Hansmann, Dierk

(56) Entgegenhaltungen:
- EP-A- 0 147 627
- US-A- 3 697 728
- US-A- 4 557 961
- PATENT ABSTRACTS OF JAPAN vol. 1995, no. 05, 30. Juni 1995 (1995-06-30) & JP 07 032518 A (DAIRIN SHOJI:KK), 3. Februar 1995 (1995-02-03)
- AVIONICS: "How about this ? Avionics would go in plane's skin" ELECTRONICS, 15. Oktober 1987 (1987-10-15), Seite 39 XP002145516 New York, USA

## Beschreibung

Die Erfindung betrifft ein Plattenbauteil, insbesondere für eine Fußbodenplatte in einem Flugzeug, wobei das Bauteil im wesentlichen aus mehreren Schichten aufgebaut ist und zumindest einen Wabenkern und mindestens eine untere und mindestens eine obere Deckschicht aufweist, wobei die Deckschichten aus GFK und/oder CFK-Lagen bestehen.

Solche Plattenbauteile werden als Sandwichstrukturen in Honigwabenbauweise, auch als Honeycomb-Sandwich-Strukturen bezeichnet, und bestehen aus einem Wabenkern sowie wenigstens je einer unteren und einer oberen Decklage. Die Decklagen sind üblicherweise kohlefaserverstärktes- und/oder glasfaserverstärktes Verbundmaterial (CFK, GFK), die in einem Autoklaven unter Zuführung von Wärme und Druck mit dem Wabenkern verbunden werden. Entsprechend dem Einsatzzweck und der notwendigen Festigkeit sind die Abmessungen des Wabenkerns sowie der Decklagen auszuwählen. Ein Beispiel einer Honeycomb-Sandwich-Struktur ist der Zeitschrift "Flight International", 17.April 1982, Seiten 988 und 989 zu entnehmen.

Zum Einsatz kommen solche Plattenbauteile insbesondere im Flugzeugbau, da hier das geringe Gewicht verbunden mit einer hohen Festigkeit von besonderer Bedeutung ist. So werden Fußbodenplatten im Flugzeug aus solchen Plattenbauteilen hergestellt. Zur Abdeckung der Fußbodenplatten in der Passagierkabine sind Kunststoffbodenbeläge "NTF" (Non Textile Floor) oder Textilteppiche vorgesehen. Es besteht innerhalb der Passagierkabine im Türbereich des Flugzeuges das Problem, daß im Fußbodenbereich eine Beheizung vorgesehen werden muß. Grund der Beheizung sind die relativ niedrigen Temperaturen (bis ca. -15°C) im Türbereich, die sich bei Flugzeugaußenhauttemperaturen bis -55°C in hohen Flughöhen nach ca. 5h Flugdauer einstellen. Ein Isolierschutz durch die Fußbodenbeläge als passive Maßnahme ist nicht ausreichend und es muß Wärmeenergie zugeführt werden. Dafür sind einerseits Luftheizungssysteme bekannt, die in diesen Türbereich warme Luft zuführen. Nachteilig ist bei diesen Warmluftsystemen der Wirkungsgrad, d.h. eine höhere elektrische Anschlußleistung, wechselnder Luftstrom der Klimaanlage, höheres Gewicht, keine homogene Flächentemperatur der Platte sowie die Beeinträchtigung der Passagiere bzw. des Flugpersonals durch die Luftzirkulation. Die Verschmutzung der Luftauslässe und auch die Gefahr des Dichtstellens der Luftauslässe durch Gepäck sind weitere Nachteile.
Als Alternativlösung wurden separat beheizbare Metallfußbodenplatten auf herkömmliche Fußbodenplatten aufgeschraubt. Auch eine solche Lösung ist mit einem hohen Gewicht sowie einem hohen Energieverbrauch verbunden.

Aus DE 39 22 465 A1 ist eine Plattenbauteil bekannt, in die eine elektrische Heizvorrichtung eingebettet ist. Das Plattenbauteil ist vorzugsweise als Sperrholzplatte ausgebildet und für Anwendungsfälle im Hausbau bzw. Haushaltsbereich vorgesehen. Die Heizvorrichtung ist aus einer Mehrzahl von bandförmigen Elektroden und einer Kunststoff-Strahlungkörperlage gebildet, wobei für die Strahlungskörperlage Kohlenstoffpartikelheizer Anwendung finden. Eine derartige Heizvorrichtung ist nicht für die Anwendung im Flugzeugbau geeignet, da solche Kohlenstoff-Gemische aufgrund Ihres Brandverhaltens für die Anwendung im Passagierbereich nicht in Frage kommen bzw. nur durch aufwendige Sicherheitsmaßnahmen einsetzbar wären, die zusätzliches Gewicht und Kosten bedeuten.

Aus Patent Abstracts of Japan - JP 07 0325 18 ist ein beheizbares Plattenbauteil bekannt, welches in der Gebäudetechnik genutzt werden kann. Der Aufbau des Bauteils ist gekennzeichnet durch ein unteres Aluminiumblech, eine hitzeisolierende Schicht, ein ebenes Heizblech, eine Aluminium-Wabenschicht und eine Steinplatte aus Marmor oder Granit. Derartige Platten sind aufgrund der Materialauswahl als schwere Fußbodenplatten für Gebäude verwendbar, jedoch nicht für ein Bauteil, welches den Anforderungen an eine Leichtbauweise im Flugzeugbau gerecht wird.

US-A-3,697,728, die alle Merkmale des Oberbegriffs des unabhängiges Anspruchs offenbart, zeigt eine Heizplatte, die für die Anwendung in einem Flugzeug zur Beheizung eines Passagierbereichs oder eines Teils eines Containers vorgesehen ist. Als Heizmedium wird eine Heizfolie vorgeschlagen, die beschichtet ist, vorzugsweise ausgebildet aus Glasfibermaterial und KarbonPartikel und damit leicht formbar ist. Eine Anwendung von Karbonpartikel ist jedoch gerade im Passagierkabinenbereich nicht möglich, da sie brennbar sind. Kohlenstoffpartikelheizer können somit bei den Fußbodenplatten wegen des Brandverhaltens nicht zum Einsatz kommen. Auch ist das vorgeschlagene Leichtgewicht-Material des Panels, auf das die Heizfolie aufgebracht wird, Balsa (leichtes Holz) oder ein festes Schaummaterial, wobei beide jedoch keine ausreichende Feuerbeständigkeit und Festigkeit aufweisen.

Der Erfindung liegt daher die Aufgabe zugrunde, ein gattungsgemäßes Plattenbauteil zu schaffen, das im Bereich von Flugzeugtüren innerhalb einer Passagierkabine oder anderen kalten Räumen im Fußbodenbereich eingesetzt werden kann, um homogene Fußbodenoberflächentemperaturen, vorzugsweise im Bereich von +20°C bis +35°C, zu erreichen und insbesondere eine Gewichtsreduzierung zu den bisherigen Lösungen ermöglicht und auch, die Sicherheit zur Anwendung eines solchen heizbaren Plattenbauteils zu erhöhen.

Diese Aufgabe wird bei einem gattungsgemäßen Plattenbauteil mit den im Patentanspruch 1 genannten Maßnahmen gelöst.

Dabei ist insbesondere von Vorteil, daß eine erhebliche Gewichtsreduzierung gegenüber den bisherigen Lösungen erreicht wird, was insbesondere für den Einsatz im Flugzeugbau ein wesentliches Erfordernis darstellt. Für die Beheizung von kalten Fußbodenbereichen in der Flugzeugpassagierkabine wird eine gleichmäßige Wärmeverteilung ohne störende Warmluftströme erreicht.

Weiterbildungen und vorteilhafte Ausgestaltungen sind in den Unteransprüchen 2 bis 10 angegeben.

Dabei ist mit der Maßnahme gemäß Anspruch 2 insbesondere erreicht, daß der Folienheizer mit einfachen Mitteln in den Plattenbauteilverbund eingebracht werden kann.

Im Anspruch 3 ist eine vorteilhafte Ausbildung des Folienheizers angegeben.

Die Ausbildung des Anspruchs 4 zeigt eine Deckplatte, die einerseits ein Schutz gegen Beschädigungen und mechanischen Beanspruchungen und andererseits eine homogene Wärmeverteilung an der Oberfläche des Plattenbauteils ermöglicht.

Mit der Ausbildung gemäß des Anspruches 6 ist eine mögliche Integration der elektrischen Bauteile und/oder der Elektronikbauteile in das Plattenbauteil aufgezeigt.

Die Maßnahme gemäß Anspruch 7 zeigt eine Möglichkeit des Schutzes der Bauteilplatte gegen eindringende Feuchtigkeit.

Die Ausgestaltungen gemäß der Ansprüche 8 und 9 sehen vor, daß ein sicheres Abschalten der Stromzuführung erfolgt, wenn beispielsweise das Plattenbauteil beschädigt wird.

Mit der Ausbildung gemäß des Anspruches 10 können Wärmeverluste an der Fußbodenplatte reduziert werden, was den notwendigen Energiebedarf für die Beheizung vermindert.

In der Zeichnung ist ein Ausführungsbeispiel der Erfindung dargestellt, das nachstehend anhand der Figuren 1 bis 6 näher beschrieben wird. In den Figuren sind gleiche Bauteile mit gleichen Bezugszeichen versehen.

Es zeigt
- Fig. 1: den Aufbau eines Plattenbauteils,
- Fig. 2: das erfindungsgemäße Plattenbauteil im Bereich eines elektrischen Anschlußelementes in der Draufsicht,
- Fig. 3: das elektrische Anschlußelement gemäß Fig. 2 in einer Seitenansicht und
- Fign. 4 bis 6: die Aussparungen im Plattenbauteil für Sensor- und Schaltelemente.

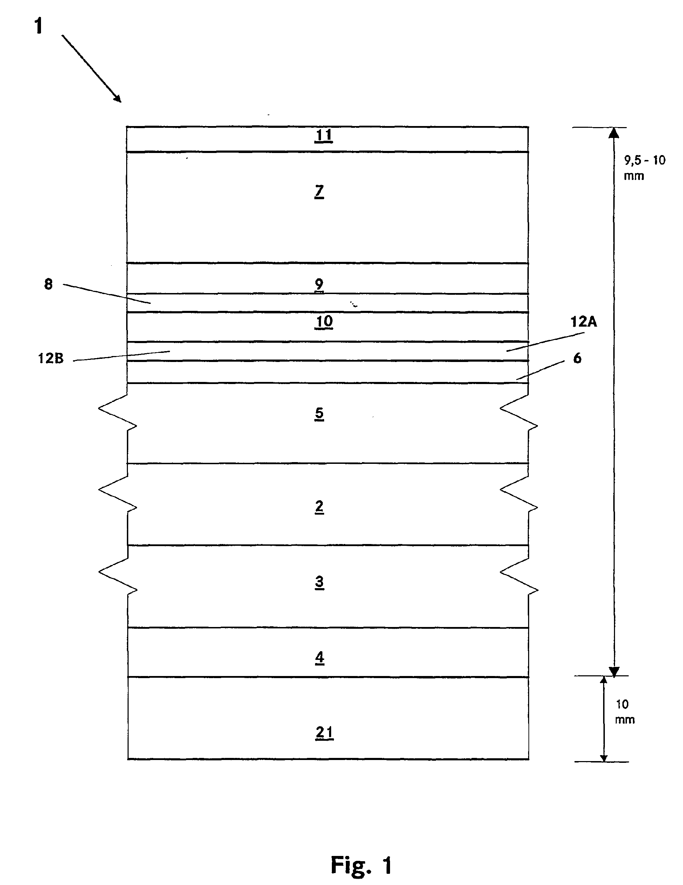

In Fig. 1 ist der Aufbau eines Plattenbauteils 1 ersichtlich. Ein solches Plattenbauteil 1, auch als Honeycomb-Sandwich-Struktur bezeichnet, besteht aus einem Wabenkern 2 und mehreren Deckschichten 3, 4, 5, 6 und 7. Die Deckschichten 3, 4, 5, 6 und 7 sind entsprechend dem Einsatzzweck und der notwendigen Festigkeit in Dicke und Ausführung auszuwählen. Für den Einsatz als Fußbodenplatte in einem Flugzeug sind die Deckschichten 3 und 4 als untere Deckschichten vorgesehen, wobei die dem Wabenkern 2 nächstliegende Lage 3 als eine kohlefaserverstärkte Prepreg-Materialschicht (carbon fiber prepreg) und die darunterliegende Lage 4 als eine glasfaserverstärkte Prepreg-Materialschicht (gfk-pf-prepreg) 4 ausgebildet ist. Oberhalb des Wabenkerns 2 ist als obere Deckschicht 5 eine kohlefaserverstärkte Prepreg-Materialschicht (CFK-Platte) sowie Decklagen 6 und 7 aus Prepreglagen, wie Fiberglass-epoxy-prepreg vorgesehen. Mit Prepreg wird mit aushärtbarem Kunstharz vorimprägniertes Fasermaterial bezeichnet. Ein solches Plattenbauteil 1 für den Einsatz als Fußbodenplatte hat aufgrund ihrer Leichtigkeit und ihrer Festigkeit einen wesentlichen Vorteil für den Einsatz in einem Flugzeug. In bestimmten Bereichen des Flugzeugfußbodens, insbesondere im Türbereich des Flugzeuges, ist es notwendig, Beheizungseinrichtungen vorzusehen, da es vor allem bei Langstreckenflügen in großen Höhen bei Flugzeugaußenhauttemperaturen bis zu -55°C im Fußbodenbereich zu Minusgraden bis -15°C kommen kann.
Dafür ist erfindungsgemäß zwischen den oberen Deckschichten 6 und 7, ein Folienheizer 8 eingebracht. Der Folienheizer 8 ist vorzugsweise aus Kapton/Cupron-Folien-Heizelementen gebildet. Kapton ist das Trägermaterial für solche Heizfolien, Cupron (Legierung) ist ein Heizmaterial. Als alternatives Heizmaterial kann Manganin verwendet werden. Die Heizelemente für den Folienheizer 8 weisen in einer bevorzugten Ausführung einen linearen Temperaturkoeffizienten auf und können zum Erreichen der notwendigen homogenen Temperaturverteilung lokal individuelle Leistungen aufbringen. Zwischen den Fiberglass epoxy-prepreg-Lagen 6 und 7 werden mittels Epoxidharzschichten (epoxy film adhesive) 9 und 10 die Folienheizelemente 8 angeordnet und verklebt.
Die Bauteilplatte 1 enthält als obere Abdeckung eine wärmeleitende Deckplatte 11 als Schutz gegenüber mechanischer Beanspruchung und zur Wärmeverteilung. Vorgesehen ist dafür eine relativ dünne, ca. 0,5 mm starke oberflächenvergütete Metallplatte, vorzugsweise aus dem Werkstoff Aluminium. Die Aluminiumplatte 11 ermöglicht einen schnellen Wärmetransport und eine homogene Wärmeverteilung. Die Metalldeckplatte 11 wird mit den anderen Schichten als Composite verklebt.
Zur Temperaturregelung an dem Plattenbauteil 1 ist eine elektronische Temperaturregeleinheit vorgesehen, die mittels eines PTC-Sensors 12A die Temperaturverteilung im Plattenbauteil 1 ermittelt und die Wärmeleistung des Folienheizers 8 für eine homogene Temperaturverteilung regelt. Bei Ausfall dieser Regelung ist zur Verhinderung einer Überhitzung der Platte 1 ein Übertemperaturschalter 12B mit zwei Abschaltstufen vorgesehen. Bei Erreichen der obersten Stufe, beispielsweise bei 80°C, wird die Plattenbeheizung solange abgeschaltet wie Spannung anliegt. Somit ist eine Überhitzung der Platte 1 ausgeschlossen und der entsprechende Folienheizer 8 ist ausgeschaltet. Die untere Stufe des Übertemperaturschalters regelt den Folienheizer 8 in einem bestimmten Temperaturniveau. Vorzugsweise kann ein Bimetall-Schalter verwendet werden, der z. B. in einem Temperaturbereich von 30°C bis 60°C (mit einer gewissen Toleranz von ca. +/- 5°C) den Heizkreis regelt. Die obere Stufe des Übertemperaturschalters 12B ist somit als Sicherheitsabschaltung bei einer Überhitzung vorgesehen und kommt erst zum Einsatz, wenn auch die untere Stufe des Übertemperaturschalters 12B ausgefallen ist.
Der PTC-Sensor 12A sowie der Übertemperaturschalter 12B sind ebenfalls in die Bauteilplatte 1 integriert. Vorzugsweise sind Folienelemente zu verwenden, die zwischen der Epoxidharzschicht (epoxy film adhesive) 10 und der Fiberglass-epoxy-prepreg-Lage 6 eingebracht wurden.

Die CFK- Platten 3 und 5 und die Metalldeckplatte 11 werden elektrisch auf Massepotential gelegt, um ein sicheres Abschalten für den Kurzschlußfall, beispielsweise bei Beschädigung der Platte, zu gewährleisten. Zusätzlich sollte in der Temperaturregeleinheit eine elektronische Überwachung des Heizstromes vorgesehen sein, damit im Kurzschlußfall der Stromkreis unterbrochen wird.

Die Bauteilplatte 1 wird als Verbund der verschiedenen Lagen in einem Autoklaven bei entsprechender Temperatur und vorzugsweise unter Vakuum hergestellt. Mit der Herstellung unter Vakuum vermeidet man Lufteinschlüsse in der Bauteilplatte 1, die nachteilig für die Anwendung derselben bei wechselnden Druckverhältnissen während des Einsatzes des Flugzeuges ist. Die Festigkeit der Bauteilplatte 1, die für die Anwendung als Flugzeugfußbodenplatte notwendig ist, wird durch den Aufbau mit kohlefaserverstärkten und glasfaserverstärkten Decklagen 3, 4, 5, 6 und 7, dem Wabenkern 2 und der Deckplatte 11 gewährleistet. Eine solche Bauteilplatte 1 hat ungefähr eine Stärke von 9,5 mm. Unterhalb dieses Verbundes kann zur Reduzierung von Wärmeverlusten eine ca. 10 mm starke Isolierschicht 21, beispielsweise aus Kunststoffschaum, angeordnet sein.
Für andere Einsatzzwecke mit anderen Festigkeitsanforderungen kann die Verbundbauplatte 1 im Aufbau und den Schichtdicken variiert werden.

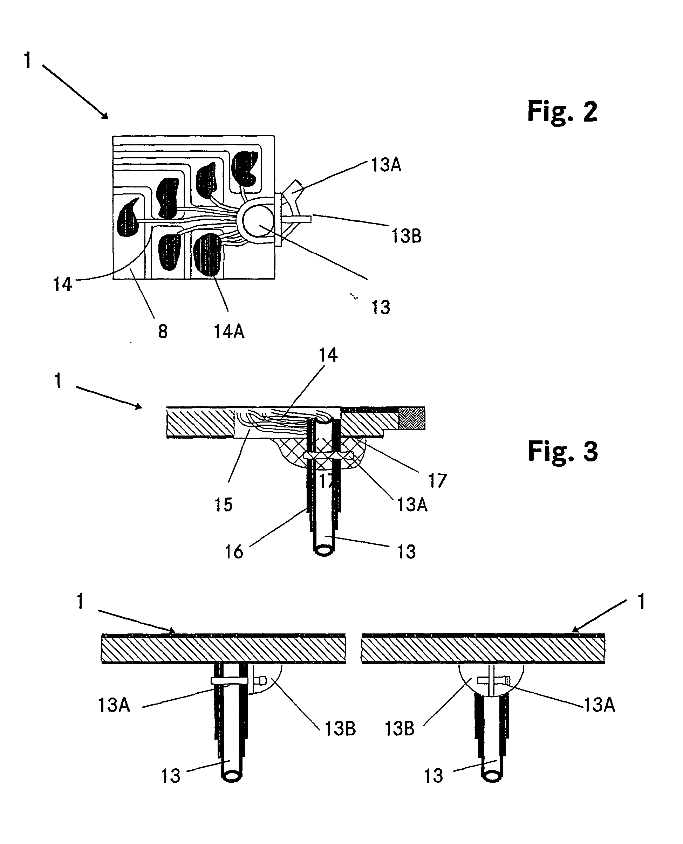

In Fig. 2 ist eine Draufsicht auf einen Ausschnitt eines erfindungsgemäßen Plattenbauteils 1 im Bereich eines Kabelanschlusses gezeigt. Ein Kabelbündel 13 ist über Einzelleitungen (beispielsweise 14) mit der Heizerfolie 8 verbunden. Eine Verbindung zu den Meß- und Schalterelementen ist ebenfalls vorgesehen. Es kann auch eine gedruckte Schaltung verwendet werden, die an Leitungen des Kabelbündels 13 angeschlossen wird. Notwendig ist auch eine Verbindung zur Gehäusemasse (CASE GND) 14A, d. h. eine Verbindung zur Aluplatte 11. Das Kabelbündel 13 ist mittels eines Kabelbinders 13A am Halter 13B der Bauteilplatte 1 befestigt.

In Fig. 3 ist die Seitenansicht auf den Bereich des Plattenbauteils 1 mit dem Kabelbündel 13 ersichtlich. Für den Kabelanschluß ist in der Platte 1 ein entsprechender Freiraum 15 vorgesehen, um das Herstellen der elektrischen Verbindungen zu ermöglichen. Ein Schrumpfschlauch 16 wird als Schutzmaßnahme über das Kabelbündel 13 gezogen. Nach Fertigstellung der Verbindungen wird der Freiraum 15 sowie ein Übergangsbereich 17 zwischen Außenfläche der Platte 1 und Kabelbündel 13 mit einem wasserdichten Verguß versehen. Vorteilhaft ist hier die Anwendung von Epoxidharz. Damit ist eine ausreichende Feuchtigkeitsdichtigkeit und Skydrolfestigkeit erreicht.

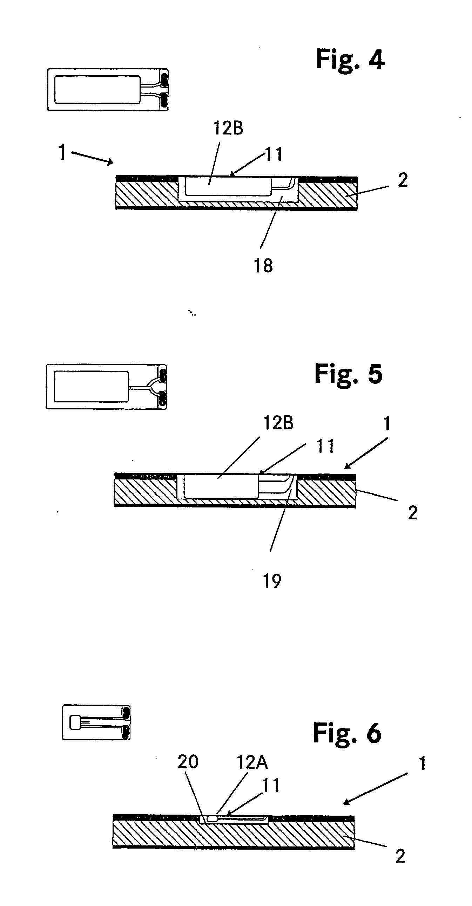

In den Fign. 4 bis 6 ist die Integration des PTC-Sensors 12A sowie der Übertemperaturschalter 12B in die Bauteilplatte 1 ersichtlich. In der Bauteilplatte 1 sind entsprechende Aussparungen 18 und 19 vorgesehen, da diese Elektronikbauteile noch nicht bei der Plattenherstellung in Verbundbauweise unter Wärme und Druck eingebracht werden können. Fig. 4 zeigt die Fußbodenaussparung 18 für die erste Stufe des Übertemperaturschalters 12B und Fig. 5 die Aussparung 19 für die zweite Stufe des Übertemperaturschalters 12B. In beiden Fällen werden die Aussparungen 18 bzw. 19 von der Deckplatte 11 überdeckt. In Fig. 6 ist eine Aussparung 20 in der Platte 1 gezeigt. Diese Aussparung 20 ist für den PTC-Sensor 12A vorgesehen. Als obere Abdeckung ist die Deckplatte 11 angeordnet. Die Elektronikbauteile 12A und 12B sind vorzugsweise jeweils an der Deckplatte 11 verklebt und mit der Heizfolie 8 verbunden. In allen Fällen können nach Herstellung einer funktionsfähigen Verbindung der elektrischen Bauteile die Aussparungen mit vorzugsweise Epoxidharz vergossen werden.

## Patentansprüche

1. Plattenbauteil, insbesondere für eine Fußbodenplatte in einem Flugzeug, wobei das Bauteil im wesentlichen aus mehreren Schichten aufgebaut ist und zumindest einen Wabenkern und mindestens eine untere und mindestens eine obere Deckschicht aufweist, wobei die Deckschichten aus GFK und/oder CFK-Lagen bestehen, ein Folienheizer (8) zumindest bereichsweise in das Plattenbauteil (1) eingebracht ist und eine wärmeleitende obere Deckplatte (11) vorgesehen ist, **dadurch gekennzeichnet, daß** eine Temperaturregeleinheit zur Regelung des Folienheizers (8) vorgesehen ist, wobei ein PTC-Sensor (12A) sowie mindestens ein Ubertemperaturschalter (12B) in das Plattenbauteil (1) integriert sind.

2. Plattenbauteil nach Anspruch 1,
**dadurch gekennzeichnet, daß**
der Folienheizer (8) zwischen zwei oberen Deckschichten (6, 7) aus GFK-Lagen angeordnet ist und eine weitere obere Deckschicht (5) zwischen Wabenkern (6) und GFK-Lagen (6, 7) eine CFK-Lage bildet.

3. Plattenbauteil nach einem der Ansprüche 1 oder 2,
**dadurch gekennzeichnet, daß**
der Folienheizer (8) aus Kapton/Cupron (bzw. Manganin)-Folien-Heizelementen gebildet ist.

4. Plattenbauteil nach einem der Ansprüche 1 bis 3,
**dadurch gekennzeichnet, daß**
als wärmeleitende obere Deckplatte (11) eine Aluminiumplatte, die als Deckschicht mit den anderen Schichten verklebt wird, vorgesehen ist.

5. Plattenbauteil nach einem der Ansprüche 1 bis 4,
**dadurch gekennzeichnet, daß**
der Übertemperaturschalter (12B) zweistufig ausgebildet ist, wobei eine erste Abschaltstufe innerhalb eines vorbestimmten Temperaturbereiches Mittel zum Regeln aufweist und eine zweite Abschaltstufe bei Erreichen einer Überhitzungstemperatur abschaltet.

6. Plattenbauteil nach einem der Ansprüche 1 bis 5,
**dadurch gekennzeichnet, daß**
Aussparungen (15, 18, 19, 20) im Plattenbauteil (1) zur Aufnahme zumindest der Anschlußleitungen (14) des Kabelbündels (13), des PTC-Sensors (12A) sowie des Übertemperaturschalters (12B) vorgesehen sind.

7. Plattenbauteil nach einem der Ansprüche 1 bis 6,
**dadurch gekennzeichnet, daß**
die vorhandenen Aussparungen (15, 18, 19, 20) am Plattenbauteil (1) und/oder Kabelanschlußstellen (17) mit einem wasserdichten Verguß, vorzugsweise Epoxidharz, versehen sind.

8. Plattenbauteil nach einem der Ansprüche 1 bis 7,
**dadurch gekennzeichnet, daß**
die CFK-Lagen (3, 5) und/oder die Metalldeckplatte (11) elektrisch auf Massepotential gelegt werden.

9. Plattenbauteil nach einem der Ansprüche 1 bis 8,
**dadurch gekennzeichnet, daß**
die Temperaturregeleinheit weiterhin ein Mittel zur Überwachung des Heizstromes, die im Kurzschlußfall abschalten, aufweist.

10. Plattenbauteil nach einem der Ansprüche 1 bis 9,
**dadurch gekennzeichnet, daß**
eine Isolierschicht (21) als weitere Lage im Plattenbauteilverbund, vorzugsweise unterhalb der Sandwichstruktur vorgesehen ist.

## Claims

1. Panel component, in particular for a floor panel in an aircraft, which component is essentially made up of several layers and comprises at least a honeycomb core and at least a bottom and at least a top covering layer, and the covering layers are made from GRP and/or are CRP layers, and a foil heater (8) is inserted in at least certain regions of the panel component (1), and a heat-conducting top cover plate (11) is provided, **characterised in that**
a temperature regulating unit is provided as a means of regulating the foil heater (8), and a PTC sensor (12A) as well as at least one overheating switch (12B) are integrated in the panel component (1).

2. Panel component as claimed in claim 1,
**characterised in that**
the foil heater (8) is disposed between two top covering layers (6, 7) provided in the form of GRP layers and another top covering layer (5) between the honeycomb core (6) and GRP layers (6, 7) forms a CRP layer.

3. Panel component as claimed in one of claims 1 or 2,
**characterised in that**
the foil heater (8) is made from Kapton/Cupron (or Manganin) foil heating elements.

4. Panel component as claimed in one of claims 1 to 3,
**characterised in that**
an aluminium plate is provided as the heat-conducting top covering plate (11) which is adhered to the other layers and constitutes the covering layer.

5. Panel component as claimed in one of claims 1 to 4,
**characterised in that**
the overheating switch (12B) is of a two-stage design, and a first shut-off stage has means for regulating purposes within a predefined temperature range and a second shut-off stage shuts down when an overheating temperature is reached.

6. Panel component as claimed in one of claims 1 to 5,
**characterised in that**
cut-outs (15, 18, 19, 20) are provided in the panel component (1) for accommodating at least the connecting cables (14) of the cable bundle (13), the PTC sensor (12A) and the overheating switch (12B).

7. Panel component as claimed in one of claims 1 to 6,
**characterised in that**
the cut-outs (15, 18, 19, 20) provided in the panel component (1) and/or the cable connection points (17) are provided with a waterproof compound, preferably epoxy resin.

8. Panel component as claimed in one of claims 1 to 7,
**characterised in that**
the CRP layers (3, 5) and/or the metal covering plate (11) are electrically connected to ground.

9. Panel component as claimed in one of claims 1 to 8,
**characterised in that**
the temperature control unit also has a means for monitoring the heating current, which is switched off in the event of a short circuit.

10. Panel component as claimed in one of claims 1 to 9,
**characterised in that**
an insulating layer (21) is provided as an additional layer in the panel component composite unit, preferably underneath the sandwich structure.

## Revendications

1. Unité de panneau, notamment pour un panneau de plancher dans un aéronef, ladite unité de panneau étant essentiellement constituée de plusieurs feuilles et comportant au moins un coeur en nid d'abeilles ainsi qu'au moins une feuille de couverture inférieure et une feuille de couverture supérieure, les feuilles de couverture étant formées de plis de composite armé de fibres synthétiques et/ou de composite armé de fibres de verre, un dispositif de chauffage sous forme de film (8) étant intégré au moins localement dans l'unité de panneau (1) et un panneau de couverture (11) supérieur thermo-conducteur étant prévu, **caractérisée par le fait qu'**il est prévu une unité de réglage de température pour la régulation du dispositif de chauffage sous forme de film (8), un capteur CTP (12A) ainsi qu'au moins un limiteur de température (12B) étant intégrés dans l'unité de panneau (1).

2. Unité de panneau selon la revendication 1, **caractérisée par le fait que** le dispositif de chauffage sous forme de film (8) est disposé entre deux feuilles de couverture (6, 7) supérieures formées de plis de composite armé de fibres de verre et qu'une feuille de couverture (5) supérieure supplémentaire, placée entre le coeur en nid d'abeilles (6) et les plis de composite armé de fibres de verre (6, 7) forme un pli de composite armé de fibres synthétiques.

3. Unité de panneau selon une des revendications 1 ou 2, **caractérisée par le fait que** le dispositif de chauffage sous forme de film (8) est formé d'éléments chauffants en kapton/cupron (ou manganine).

4. Unité de panneau selon une des revendications 1 à 3, **caractérisée par le fait qu'**il est prévu comme feuille de couverture (11) supérieure une feuille d'aluminium qui, en tant que feuille de couverture, est collée aux autres plis.

5. Unité de panneau selon une des revendications 1 à 4, **caractérisée par le fait que** le limiteur de température (12B) est à deux étages, un premier étage présentant des moyens de régulation à l'intérieur d'une plage de température déterminée et un deuxième étage opérant une coupure dès qu'une température de surchauffe est atteinte.

6. Unité de panneau selon une des revendications 1 à 5, **caractérisée par le fait qu'**il est prévu des évidements (15, 18, 19, 20) dans l'unité de panneau (1) pour recevoir au moins les lignes de connexion (14) du faisceau de conducteurs (13), du capteur CTP (12A) et du limiteur de température (12B).

7. Unité de panneau selon une des revendications 1 à 6, **caractérisée par le fait que** les évidements (15, 18, 19, 20) prévus dans l'unité de panneau (1) et/ou les points de connexion de conducteurs (17) sont pourvus d'une masse moulée étanche à l'eau, de préférence de résine époxy.

8. Unité de panneau selon une des revendications 1 à 7, **caractérisée par le fait que** les plis de composite renforcé par fibres de verre (3, 5) et/ou la feuille de couverture métallique (11) sont reliés électriquement au potentiel de masse.

9. Unité de panneau selon une des revendications 1 à 8, **caractérisée par le fait que** l'unité de régulation de température présente également un moyen de surveillance du courant de chauffage qui opère une coupure en cas de circuit.

10. Unité de panneau selon une des revendications 1 à 9, **caractérisée par le fait qu'**il est prévu une couche isolante (21) comme pli supplémentaire dans l'unité de panneau composite, de préférence sous la structure sandwich.
